(19)

Europäisches
Patentamt
European
Patent Office
Office européen
des brevets

(11)  **EP 2 715 308 B1**

(12)  **EUROPEAN PATENT SPECIFICATION**

(45) Date of publication and mention
of the grant of the patent:
**23.03.2016  Bulletin 2016/12**

(21) Application number: **12731715.4**

(22) Date of filing: **30.05.2012**

(51) Int Cl.:
***G01M 15/10*** *(2006.01)*

(86) International application number:
**PCT/IB2012/052716**

(87) International publication number:
**WO 2012/164504 (06.12.2012 Gazette 2012/49)**

(54) **SYSTEM AND METHOD FOR DETERMINING THE CONCENTRATION OF EXHAUST GASES EMITTED BY AN AUTOMOTIVE INTERNAL-COMBUSTION ENGINE**

SYSTEM UND VERFAHREN ZUR BESTIMMUNG DER KONZENTRATION VON ABGASEN AUS EINEM KRAFTFAHRZEUGMOTOR MIT EINEM VERBRENNUNGSMOTOR

SYSTÈME ET PROCÉDÉ POUR DÉTERMINER LA CONCENTRATION DES GAZ D'ÉCHAPPEMENT ÉMIS PAR UN MOTEUR À COMBUSTION INTERNE D'AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.05.2011  IT TV20110074**

(43) Date of publication of application:
**09.04.2014  Bulletin 2014/15**

(73) Proprietor: **Texa S.p.A.**
**Monastier di Treviso (IT)**

(72) Inventors:
• **CAVALLI, Manuele**
  **I-31056 Musestre Di Roncade (IT)**
• **GIUDICI, Roberto**
  **I-31030 Breda Di Piave (IT)**

(74) Representative: **Zamprogno, Bruno et al**
**STUDIO TORTA S.p.A.**
**Via Viotti, 9**
**10121 Torino (IT)**

(56) References cited:
**US-B1- 6 516 656**

## Description

TECHNICAL FIELD

The present invention relates to a system and a method for determining the concentration of exhaust gases emitted by an automotive internal-combustion engine, preferably a petrol or diesel engine of a motor vehicle, or a motor cycle, or any other type of similar land vehicle, to which the ensuing treatment will make explicit reference, without this implying any loss of generality.

BACKGROUND ART

As is known, gas-analyser systems are configured for determining the concentration of pollutant gases emitted by motor vehicles, typically carbon dioxide $CO_2$ and carbon monoxide CO, and/or hydrocarbon gases such as hexane, propane, etc., so as to be able to verify whether the concentrations detected are or not below corresponding limit thresholds established by law.

Some currently known systems for analysing engine exhaust gases function according to NDIR (non-dispersive infrared) technology and typically comprise: a gas-analysis chamber provided with an inlet terminal connected, through an active-carbon filter, to the exhaust duct of the engine in order to receive the exhaust gases to be analysed; a pump designed to take in the exhaust gases from the exhaust duct of the vehicle so as to introduce them into the analysis chamber; an infrared-emitter source designed to emit within the gas-analysis chamber a beam of radiation in the infrared frequency band; an infrared multidetector device configured for generating an electrical signal of an electrical quantity that indicates absorption of radiation by the exhaust gases in given frequency bands; and an electronic control circuit for determining the concentration of each pre-set exhaust gas on the basis of the electrical quantity of the signal associated to said pre-set gas detector, and of an electrical reference quantity associated to a condition of absence of gases in the analysis chamber.

The exhaust-gas-analyser systems described above are typically configured so as to carry out an initial automatic calibration, during which the electronic control circuit determines the electrical reference quantity, normally the voltage associated to a zero concentration of gases referred to hereinafter as "reference zero". The electrical reference quantity associated to the reference zero is then used precisely as reference in determining the concentration of the exhaust gases.

In the case in point, the automatic calibration is carried out by: taking in air from the external environment, filtering it through the active-carbon filter, and introducing it filtered into the analysis chamber; generating the beam of radiation into the chamber; and assigning to the electrical reference quantity the electrical quantity generated by the multidetector device.

Unfortunately, the determination of the electrical reference quantity, carried out through the initial automatic calibration described above, is affected, on the one hand, by intrinsic error caused by the presence of contaminating gases in the external environmental air used as "gas-free" reference air and, on the other, by the insufficient capacity of filtering of the gases by the active-carbon filter.

Laboratory tests conducted by the present applicant have in fact shown that the air taken in from the external environment is not pure, but contains concentrations of carbon dioxide and/or carbon monoxide that, in addition to not being negligible for the purposes of analysis of contaminating gases, vary on the basis of various factors, such as, for example, the place and the instant at which the analysis is carried out. The result of the aforesaid laboratory tests finds confirmation also in the statistical estimates present in numerous scientific publications, which show, for example, that the presence of carbon dioxide $CO_2$ in the atmosphere tends to increase exponentially and that today its average percentage in the air is approximately 0.039%.

US 6 516 656 B1 discloses an improved emission sampling and measurement system provided for continuously sampling and analyzing the chemical content of a vehicle emissions and the ambient air for data evaluation and comparison. The emission sampling and measurement system comprises a vehicle having an emissions source, devices for intaking vehicle emissions and ambient air, and analysis devices for determining the chemical content of the emissions and ambient air. The gas streams may be dried in a series of selectively permeable drying tubes prior to measurement in the analysis devices, in order to effectuate a more precise sample of the constituent elements of the gases. Following analysis, the data collected is processed, stored, and compared, and the results displayed on a screen in the vehicle driver's compartment in a real-time manner. In this fashion, real-time comparative data analysis is presented in a format not presently available.

The present applicant has conducted an indepth study having as object identification of a solution that will enable increase of the precision in determining the electrical reference quantity associated to the reference zero in the course of automatic calibration of the analyser system.

The aim of the present invention is hence to provide a solution that will enable the object indicated above to be achieved.

The above aim is achieved by the present invention in so far as it relates to a system and a method for determining the concentration of one or more exhaust gases emitted by an automotive internal-combustion engine, as defined in the annexed claims.

The present invention moreover regards a method for determining the concentration of one or more exhaust gases emitted by an automotive internal-combustion engine, as defined in Claim 5 and any one of the claims that depend thereupon.

The present invention will now be described with reference to the annexed drawings, which illustrate a non-limiting example of embodiment thereof, and in which:

- Figure 1 is a schematic illustration of a system for analysing exhaust gases emitted by an automotive internal-combustion engine, provided according to the teachings of the combustion engine, provided according to the teachings of the present invention; and
- Figure 2 is a flowchart of the operations implemented by the exhaust-gas analyser system shown in Figure 1.

BEST MODE FOR CARRYING OUT THE INVENTION

The present invention will now be described in detail with reference to the attached figures to enable a person skilled in the sector to implement and use it. Various modifications to the embodiments described will be immediately evident to skilled persons, and the generic principles described can be applied to other embodiments and applications without thereby departing from the sphere of protection of the present invention, as defined in the annexed claims. Consequently, the present invention must not be considered as being limited to the embodiments described and illustrated, but it must be granted the widest sphere of protection in conformance with the principles and characteristics described and claimed herein.

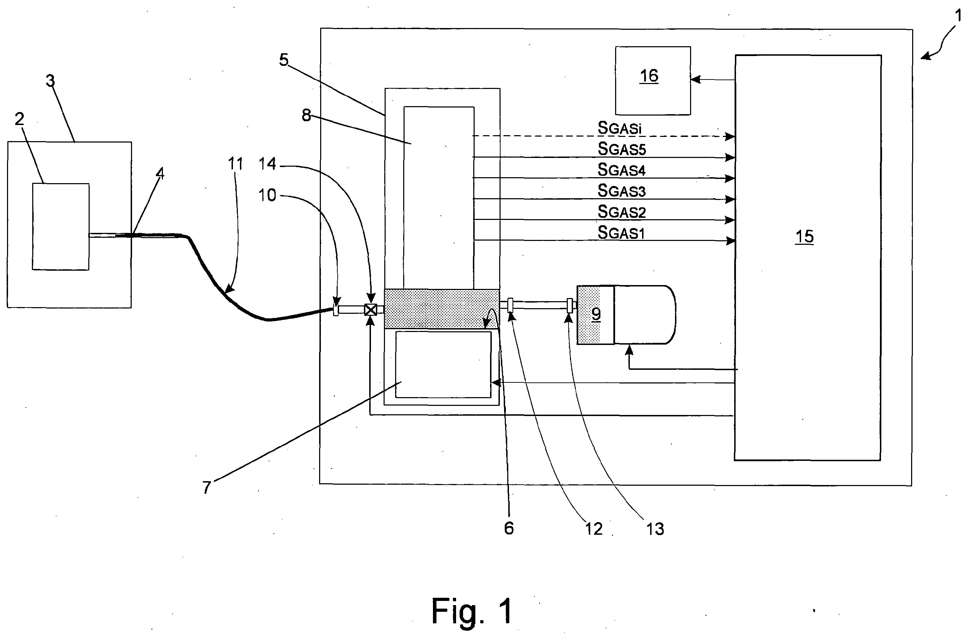

With reference to Figure 1, designated as a whole by 1 is an automotive exhaust-gas analyser system configured to determine the concentration of one or more exhaust gases emitted by an internal-combustion engine 2 of a vehicle 3, through an exhaust-gas duct 4.

Preferably, the vehicle 3 may correspond to a motor vehicle, or a motor cycle, or any other type of similar land vehicle.

The exhaust-gas analyser system 1 is provided with an infrared multidetector device 5, which comprises: an analysis chamber 6 structured for receiving and containing the exhaust gases to be analysed; an infrared emitter device 7, which is coupled to the analysis chamber 6 and is configured to emit a beam of radiation, which has wavelengths comprised in the infrared band, into the analysis chamber 6 so as to pass through the exhaust gases contained therein; and a series of infrared sensors or multidetectors 8, which are coupled to the analysis chamber 6, preferably on the opposite side with respect to the infrared emitter device 7 to receive the radiation emitted, and are configured in such a way as to measure the concentration of one or more exhaust gases present within of the analysis chamber 6, on the basis of the variations of energy of the radiation in the bands of the absorption frequencies of the pre-set gases themselves.

Preferably, the infrared multidetectors 8 could be configured to measure the concentration of one or more of the following exhaust gases: carbon dioxide $CO_2$, and/or carbon monoxide CO, and/or hydrocarbon gases such as, for example, hexane and propane or similar pollutant gases. In greater detail, infrared multidetectors 8 are configured to output one or more electrical signals $S_{GASi}$, the electrical quantities (current or voltage) of which indicate the concentrations of the gases detected in the analysis chamber 6.

In particular, in the example illustrated in Figure 1, the electrical quantity of an electrical signal $S_{GAS1}$ generated by the infrared multidetectors 8 indicates the concentration of carbon dioxide, the electrical quantity of an electrical signal $S_{GAS2}$ generated by the infrared multidetectors 8 indicates the concentration of carbon monoxide, the electrical quantity of an electrical signal $S_{GAS3}$ generated by the infrared multidetectors 8 indicates the concentration of hexane, and the electrical quantity of an electrical signal $S_{GAS4}$ generated by the infrared multidetectors 8 indicates the concentration of propane.

With reference to Figure 1, the exhaust-gas analyser system 1 further comprises an intake pump 9 corresponding, for example, to a vacuum pump, which is connected to the analysis chamber 6 and is designed, upon command, to take in the exhaust gases contained in the latter so as to expel them preferably into the external environment.

According to a preferred embodiment shown in Figure 1, the analysis chamber 6 is structured to present an inlet terminal 10, which is designed to be connected to the exhaust-gas duct 4, through, preferably, an external connection pipe 11, which is for example flexible, for receiving the engine exhaust gases; and an outlet terminal 12 connected to an intake terminal 13 of the intake pump 9.

The exhaust-gas analyser system 1 further comprises an electrically controlled shut-off valve 14, for example a solenoid valve, which is arranged in a position corresponding to the inlet terminal 10 of the analysis chamber 6, for example along a duct which connects the inlet terminal 10 to the analysis chamber 6, and is configured to switch between an opening state and a closing state in which it opens and, respectively, closes the inlet terminal 10 so as to connect or, respectively, isolate the analysis chamber to/from the exhaust-gas duct 4.

With reference to Figure 1, the exhaust-gas analyser system 1 further comprises an electronic control unit 15, which is electrically connected to: the intake pump 9 and the infrared emitter device 7 in such a way as to control turning-on/turning-off thereof; the infrared multidetectors 8 so as to receive the electrical signals $S_{GASi}$ indicating the concentrations of the exhaust gases detected in the analysis chamber 6; and the shut-off valve 14 for controlling selectively the closing/opening state thereof.

In particular, the electronic control unit 15 is configured to perform an automatic procedure of calibration of an electrical reference quantity, for example a voltage V0, associated to a condition of absence of gases in the analysis chamber 6, and in use, controls intake of the exhaust gases into the analysis chamber 6, actuates the infrared multidetector device 5 to generate the electrical signals $S_{GASi}$, and determines the concentrations of one or more exhaust gases, on the basis of the electrical quantities, for example of the voltages $Vmi$, associated to the signals $S_{GASi}$ received, and of the electrical reference quantity $V0$ associated to the condition of absence of gases in the analysis chamber 6.

According to a possible embodiment, the electronic control unit 15 is configured to determine the concentration of the exhaust gases contained in the analysis chamber 6 through a function of absorption of the radiation of the exhaust gases in the chamber $F(V0/Vmi)$, where $V0$ is the reference quantity generated by the infrared multidetectors 5 in the course of automatic calibration, while $Vmi$ is the voltage of the electrical signal $S_{GASi}$ generated by the infrared multidetectors 8 and is associated to the i-th gas.

Preferably, but not necessarily, the function of absorption of radiation implemented by the electronic control unit 15 for calculating the concentration of the gases can correspond, for example, to the known Beer-Lambert equation:

$$F(V0/Vmi) = -\log(V0/Vmi)$$

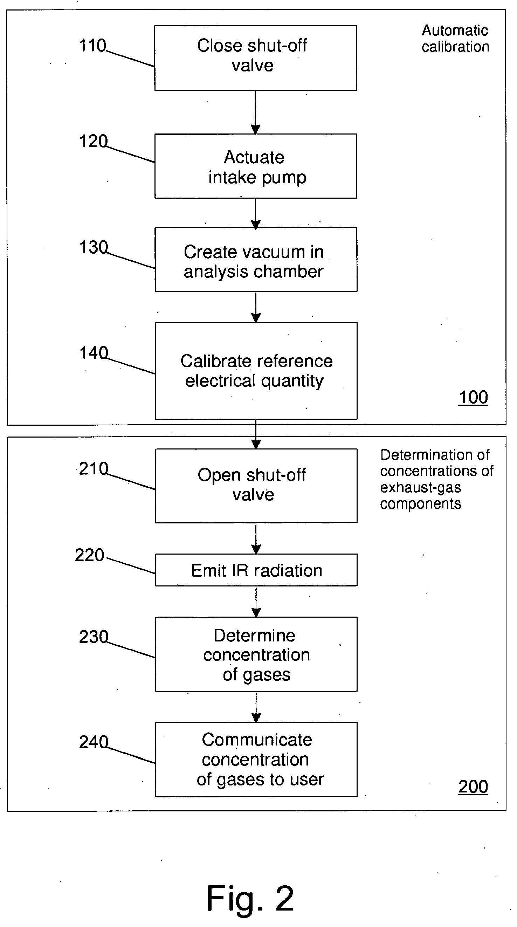

Represented in Figure 2 are the operations implemented by the analyser system 1 during determination of the effective concentration of the engine exhaust gases, where it is assumed that the external connection pipe 11 is appropriately coupled to the exhaust-gas duct 4, for example fitted into the latter.

The electronic control unit 15 is configured to perform a first procedure in which it automatically calibrates the electrical reference quantity $V0$ associated to the condition of absence of gases in the analysis chamber (Block 100), and then carries out a procedure of analysis so as to determine the concentration of the engine exhaust gases (Block 200).

In particular, in the calibration procedure, the electronic control unit 15: controls closing of the shut-off valve 14 (Block 110) so as to isolate the analysis chamber 6 from the exhaust-gas duct 4; and turns on the intake pump 9 (Block 120) in such a way as to suck the residual gases contained in the analysis chamber 6 until a condition of complete absence of gases in the analysis chamber 6 is reached, where the pressure inside the latter reaches approximately a minimum vacuum pressure (Block 130). In other words, the electronic control unit 15 actuates the intake pump 9 for creating a negative pressure in the analysis chamber 6 so as to bring it to a minimum pre-set pressure corresponding approximately to a vacuum pressure associated substantially to a vacuum condition. In this step, the intake pump 9 advantageously clears the analysis chamber 6 of any trace of gas thus bringing about a complete cleaning thereof.

The minimum vacuum pressure can be comprised, for example, between about 0 and $5 \cdot 10^{-3}$ bar, preferably about $2.5 \cdot 10^{-3}$ bar.

The electronic control unit 15 is configured to carry out advantageously calibration of the electrical reference quantity $V0$ associated to the condition of absence of gases within the gas-analysis chamber 6 (Block 140). In the case in point, the electronic control unit 15 switches on the infrared emitter device 7 to generate the beam of radiation in the analysis chamber 6, and receives from the infrared multidetectors 8 the electrical quantity associated to the condition of absence of gases. In detail, the electronic control unit 15 determines the electrical reference quantity $V0$ on the basis of the electrical quantity of the electrical signal generated by the infrared multidetectors 8 in the condition of absence of gases.

Complete cleaning of the gas-analysis chamber 6 enables in fact the analyser system 1 to associate in a conveniently accurate way the electrical reference quantity, for example the value of the voltage $V0$ of the electrical signal generated by the infrared multidetectors 8 to a zero gas concentration (reference zero used by the system for the subsequent calculations of gas concentration).

Once the calibration described above is through, the electronic control unit 15: governs opening of the shut-off valve 14 in such a way as to take in the exhaust gases emitted by the exhaust duct 4 within the analysis chamber 6 (Block 210); turns back on the infrared emitter device 7, if it is off, or keeps it on so as to emit radiation towards the exhaust gases in the analysis chamber 6 (Block 220); receives the electrical quantities $Vmi$ associated to the electrical signals generated by the infrared multidetectors 8 on the basis of the energy absorption of corresponding gases in the pre-set frequency bands associated to the gases themselves; and determines the concentration of the exhaust gases on the basis of the electrical quantities $Vmi$ themselves (Block 230).

At this point, the electronic control unit 15 can preferably, but not necessarily, compare the concentrations of the exhaust gases determined with corresponding gas-concentration thresholds and generate, through a user interface 16, warning messages/signals on the basis of the result of the comparisons and/or communicate to the user the gas concentrations determined themselves.

The advantages of the exhaust-gas analyser system described above are evident. The complete evacuation of the residual gases from the analysis chamber carried out in the course of automatic calibration enables determination of a correct reference quantity in so far as it is associated to a real condition of absence of gases in the analysis chamber. The precision of calculation of the reference quantity, i.e., of the reference zero, consequently determines an increase in the precision of the effective measurements of concentration of the gases, in particular when a function associated to the absorption of radiation using the reference quantity itself is used in the calculation.

Finally, it is clear that modifications and variations may be made to the system described and illustrated above without thereby departing from the scope of the present invention defined by the annexed claims.

## Claims

1. An exhaust-gas analyser system (1) configured to determine the concentration of one or more exhaust gases of an automotive internal-combustion engine; said system comprising:

   - an infrared multi-detecting device (5) provided with:

      • a gas-analysis chamber (6) structured to contain the exhaust gases to be analysed;
      • infrared emitter means (7) configured to emit infrared radiation in said analysis chamber (6) towards the exhaust gases contained therein; and
      • multi-detecting infrared means (8) configured to generate electrical measurement quantities on the basis of absorption of said radiation by the exhaust gases present within said analysis chamber (6);

   - electronic control means (15), which are configured to determine the concentrations of one or more exhaust gases, based on a series of electrical measurement quantities (Vmi) provided by said multi-detecting infrared means (8) and of an electrical reference quantity (V0);

   said system (1) being **characterized by** comprising:

      - pumping means (9) connected to said analysis chamber (6) for performing an intake within the analysis chamber (6) itself; and wherein, said electronic control means (15) are moreover configured to:
      - control said pumping means (9) in such a way as to take in air/residual gases contained in the analysis chamber (6) until a condition of absence of gases in the chamber itself is reached, in which the pressure inside the analysis chamber (6) reaches a pre-set minimum pressure;
      - control said emitter means (7) so as to emit infrared radiation into said analysis chamber (6); and
      - determine said electrical reference quantity (V0) based on the electrical quantity of the electrical signals generated by said multi-detecting infrared means (8) as a function of the radiation detected in said condition of absence of gases.

2. The system according to Claim 1, comprising at least one shut-off valve (14) designed to switch between: an opening state, where it sets the analysis chamber (6) in communication with an exhaust-gas duct (4) of the automotive internal-combustion engine (2) for receiving at input the exhaust gases; and a closing state where it isolates the analysis chamber (6) from the exhaust-gas duct (4);
   said electronic control means (15) are moreover configured to:

      - switch the shut-off valve (14) into the closing state;
      - turn on said pumping means (9) to take in the residual gases contained in the analysis chamber (6) until said condition of absence of gases is reached;
      - control said emitter means (7) so as to emit infrared radiation into said analysis chamber (6);
      - switch on multi-detecting infrared means (8) to generate an electrical measurement quantity, on the basis of the absorption of said radiation in the condition of absence of gases in said analysis chamber (6); and
      - assign to said electrical reference quantity (V0) said electrical measurement quantity detected by the multi-detecting infrared means (8) in the condition of absence of gases in the analysis chamber (6).

3. The system according to Claim 2, wherein said electronic control means (15) are configured to determine the concentration of each said exhaust gas on the basis of a function of absorption of radiation F(V0/Vmi)), wherein V0 is the reference quantity generated by the multi-detecting infrared means (8) in the condition of absence of gases in the analysis chamber (6), while Vmi is the electrical measurement quantity generated by the multi-detecting infrared means (8) and associated to absorption of a given i-th gas in a corresponding pre-set frequency band.

4. The system according to any one of the preceding claims, wherein said pumping means (9) comprise a vacuum pump; said pre-set minimum pressure is about the vacuum pressure in said analysis chamber (6).

5. A method for determining the concentration of one or more exhaust gases emitted by an automotive internal-combustion engine (2); said method comprising the steps of:

      - connecting a gas-analysis chamber (6), structured to contain the exhaust gases to be analysed, to an exhaust duct (4) of the internal-combustion engine (2) of the vehicle (3);
- emitting, through emitter means (7), infrared radiation into said analysis chamber (6) towards the exhaust gases contained therein;
- detecting, via multi-detecting infrared means (8), said radiation so as to generate electrical measurement quantities (Vmi), on the basis of the absorption of said radiation by one or more exhaust gases contained within said analysis chamber (6); and
- determining the concentration of one or more exhaust gases, based on a series of said electrical measurement quantities (Vmi) provided by said multi-detecting infrared means (8) and of an electrical reference quantity (V0);

said method being **characterized by** comprising the steps of:

- sucking the residual gases contained in the analysis chamber (6) until a condition of absence of gases is reached in the chamber itself, where the pressure inside the analysis chamber (6) reaches a minimum reference pressure; and
- determining said electrical reference quantity (V0) on the basis of the electrical quantity of the electrical signal generated by said multi-detecting infrared means (8) in said condition of absence of gases.

6. The method according to Claim 5, comprising the steps of providing:

- at least one shut-off valve (14) operable to switch between:

an opening state, where it sets the analysis chamber (6) in communication with the exhaust duct (4) of the automotive internal-combustion engine (2) for receiving at input the exhaust gases; and a closing state, where it isolates the analysis chamber (6) from the exhaust duct (4); and

- pumping means (9) connected to said analysis chamber (6); said method further comprising the steps of:
- switching the shut-off valve (14) into the closing state;
- switching on said pumping means (9) in such a way as to suck the air/residual gases contained in the analysis chamber (6) until said condition of absence of gases in the analysis chamber (6) itself is reached;
- controlling said emitter means (7) for emitting infrared radiation into said analysis chamber (6);
- controlling said infrared multi-detecting means (8) for generating an electrical measurement quantity, on the basis of the absorption of said radiation in the condition of absence of gases in said analysis chamber (6); and
- assigning to said electrical reference quantity (V0) said electrical measurement quantity detected by the multi-detecting infrared means (8) in the condition of absence of gases in the analysis chamber (6).

7. The method according to Claim 6, comprising the steps of determining the concentration of one or more exhaust gases on the basis of a radiation absorption function F(V0/Vmi), where: V0 is the reference quantity of the electrical signal generated by the multi-detecting infrared means (8) in said condition of absence of gases; while Vmi is the electrical measurement quantity of the electrical signal generated by the multi-detecting infrared means (8) associated to the i-th gas.

8. The method according to any one of Claims 5 to 7, wherein said pre-set minimum pressure corresponds approximately to a vacuum pressure in said analysis chamber (6).

**Patentansprüche**

1. Abgasanalysesystem (1), das aufgebaut ist, um die Konzentration eines oder mehrerer Abgase eines Kraftfahrzeug-Verbrennungsmotors zu bestimmen, wobei das System umfasst:

- eine Mehrfach-Infraroterfassungsvorrichtung (5), die versehen ist mit:

• einer Gasanalysekammer (6), die strukturiert ist, so dass sie die zu analysierenden Gase enthält;
• einem Infrarotsendermittel (7), das aufgebaut ist, um Infrarotstrahlung in der Analysekammer (6) in Richtung der darin enthaltenen Gase zu emittieren; und
• einem Mehrfach-Infraroterfassungsmittel (8), das aufgebaut ist, um elektrische Messgrößen auf der Basis der Absorption der Strahlung durch die in der Analysekammer (6) vorhandenen Abgase zu erzeugen;

- elektronische Steuermittel (15), die aufgebaut sind, um die Konzentrationen eines oder mehrerer Abgase basierend auf einer Reihe elektrischer Messgrößen (Vmi), die von dem Mehrfach-Infraroterfassungsmittel (8) bereitgestellt werden, und auf einer elektrischen Referenzgröße (V0) zu bestimmen;

wobei das System (1) **dadurch gekennzeichnet ist,**

**dass** es umfasst:

- ein Pumpmittel (9), das mit der Analysekammer (6) verbunden ist, um ein Einsaugen in der Analysekammer (6) selbst durchzuführen;

und wobei die elektronischen Steuermittel (15) ferner aufgebaut sind, um:

- das Pumpmittel (9) in einer derartigen Weise zu steuern, dass es in der Analysekammer (6) enthaltene Luft/Restgase einsaugt, bis ein Zustand der Abwesenheit von Gasen in der Kammer selbst erreicht wird, wobei der Druck im Inneren der Analysekammer (6) einen vorher festgelegten minimalen Druck erreicht;
- das Sendermittel (7) zu steuern, so dass es Infrarotstrahlung in die Analysekammer emittiert; und
- die elektrische Referenzgröße (V0) basierend auf der elektrischen Größe der elektrischen Signale, die von dem Mehrfach-Infraroterfassungsmittel (8) erzeugt werden, als eine Funktion der Strahlung zu bestimmen, die in dem Zustand der Abwesenheit von Gasen erfasst wird.

2. System nach Anspruch 1, das umfasst: wenigstens ein Absperrventil (14), das konzipiert ist, um zwischen einem Öffnungszustand, in dem es die Analysekammer (6) in Verbindung mit einem Abgaskanal (4) des Kraftfahrzeug-Verbrennungsmotors (2) bringt, um am Eingang die Abgase zu empfangen, und einem Schließzustand, in dem es die Analysekammer (6) von dem Abgaskanal (4) trennt, umzuschalten;
wobei die elektronischen Steuermittel (15) überdies aufgebaut sind, um:

- das Absperrventil (14) in den Schließzustand zu schalten;
- das Pumpmittel (9) einzuschalten, um die in der Analysekammer (6) enthaltenen Restgase anzusaugen, bis der Zustand der Abwesenheit von Gasen erreicht wird;
- das Sendermittel (7) zu steuern, so dass es Infrarotstrahlung in die Analysekammer (6) emittiert;
- das Mehrfach-Infraroterfassungsmittel (8) einzuschalten, um eine elektrische Messgröße auf der Basis der Absorption der Strahlung in dem Zustand der Abwesenheit von Gasen in der Analysekammer (6) zu erzeugen; und
- die elektrische Referenzgröße (V0) der elektrischen Messgröße zuzuordnen, die von dem Mehrfach-Infraroterfassungsmittel (8) in dem Zustand der Abwesenheit von Gasen in der Analysekammer (6) erfasst wurde.

3. System nach Anspruch 2, wobei die elektronischen Steuermittel (15) aufgebaut sind, um die Konzentration jedes der Abgase auf der Basis einer Strahlungsabsorptionsfunktion $F((V0/Vmi))$ zu bestimmen, wobei VO die Referenzgröße ist, die durch das Mehrfach-Infraroterfassungsmittel (8) in dem Zustand der Abwesenheit von Gasen in der Analysekammer (6) erzeugt wird, während Vmi die elektrische Messgröße ist, die durch das Mehrfach-Infraroterfassungsmittel (8) erzeugt wird und zu der Absorption eines gegebenen i-ten Gases in einem entsprechenden vorher festgelegten Frequenzband gehört.

4. System nach einem der vorhergehenden Ansprüche, wobei das Pumpmittel (9) eine Vakuumpumpe umfasst; wobei der vorher festgelegte minimale Druck etwa der Vakuumdruck in der Analysekammer (6) ist.

5. Verfahren zur Bestimmung der Konzentration eines oder mehrerer Abgase, die von einem Kraftfahrzeug-Verbrennungsmotor (2) emittiert werden;
wobei das Verfahren die folgenden Schritte umfasst:

- Verbinden einer Gasanalysekammer (6), die strukturiert ist, so dass sie die zu analysierenden Gase enthält, mit einem Abgaskanal (4) des Kraftfahrzeug-Verbrennungsmotors (2) des Fahrzeugs (3);
- Emittieren von Infrarotstrahlung in die Analysekammer (6) in Richtung der darin enthaltenen Gase durch ein Infrarotsendermittel (7); und
- Erfassen der Strahlung über ein Mehrfach-Infraroterfassungsmittel (8), um elektrische Messgrößen (Vmi) auf der Basis der Absorption der Strahlung durch ein oder mehrere in der Analysekammer (6) vorhandene Abgase zu erzeugen; und
- Bestimmen der Konzentration eines oder mehrerer Abgase basierend auf einer Reihe der elektrischen Messgrößen (Vmi), die von dem Mehrfach-Infraroterfassungsmittel (8) bereitgestellt werden, und auf einer elektrischen Referenzgröße (V0);

wobei das Verfahren **dadurch gekennzeichnet ist, dass** es die folgenden Schritte umfasst:

- Einsaugen der in der Analysekammeer (6) enthaltenen Restgase, bis ein Zustand der Abwesenheit von Gasen in der Kammer selbst erreicht wird, wobei der Druck im Inneren der Analysekammer (6) einen vorher festgelegten minimalen Druck erreicht;
- Bestimmen der elektrischen Referenzgröße (V0) basierend auf der elektrischen Größe des elektrischen Signals, das von dem Mehrfach-Infraroterfassungsmittel (8) in dem Zustand der Abwesenheit von Gasen erzeugt wird.

6. Verfahren nach Anspruch 5, das die Schritte der Bereitstellung von folgendem umfasst:

- wenigstens ein Absperrventil (14), das betriebsfähig ist ist, um zwischen einem Öffnungszustand, in dem es die Analysekammer (6) in Verbindung mit einem Abgaskanal (4) des Kraftfahrzeug-Verbrennungsmotors (2) bringt, um am Eingang die Abgase zu empfangen, und einem Schließzustand, in dem es die Analysekammer (6) von dem Abgaskanal (4) trennt, umzuschalten; und
- ein Pumpmittel (6), das mit der Analysekammer (6) verbunden ist;

wobei das Verfahren ferner die folgenden Schritte umfasst:

- Schalten des Absperrventils (14) in den Schließzustand;
- Einschalten des Pumpmittels (9) in einer Weise, um die in der Analysekammer (6) enthaltene Luft/Restgase anzusaugen, bis der Zustand der Abwesenheit von Gasen in der Analysekammer (6) selbst erreicht wird;
- Steuern des Sendermittels (7), so dass es Infrarotstrahlung in die Analysekammer (6) emittiert;
- Steuern des Mehrfach-Infraroterfassungsmittels (8), um eine elektrische Messgröße auf der Basis der Absorption der Strahlung in dem Zustand der Abwesenheit von Gasen in der Analysekammer (6) zu erzeugen; und
- Zuordnen der elektrischen Referenzgröße (V0) zu der elektrischen Messgröße, die von dem Mehrfach-Infraroterfassungsmittel (8) in dem Zustand der Abwesenheit von Gasen in der Analysekammer (6) erfasst wurde.

7. Verfahren nach Anspruch 6, das die Schritte der Bestimmung der Konzentration eines oder mehrerer Abgase auf der Basis einer Strahlungsabsorptionsfunktion F((V0/Vmi)) umfasst, wobei VO die Referenzgröße des elektrischen Signals ist, das durch das Mehrfach-Infraroterfassungsmittel (8) in dem Zustand der Abwesenheit von Gasen erzeugt wird, während Vmi die elektrische Messgröße des elektrischen Signals ist, das durch das Mehrfach-Infraroterfassungsmittel (8) erzeugt wird und zu dem i-ten Gas gehört.

8. System nach einem der Ansprüche 5 bis 7, wobei der vorher festgelegte minimale Druck etwa einem Vakuumdruck in der Analysekammer (6) entspricht.

**Revendications**

1. Système d'analyseur de gaz échappement (1), configuré de façon à déterminer la concentration d'un ou de plusieurs gaz échappement d'un moteur à combustion interne d'automobile ; ledit système comprenant :

- un dispositif de détection multiple à infrarouges (5), muni de :

• une chambre d'analyse de gaz (6), structurée de façon à contenir les gaz d'échappement devant être analysés ;
• des moyens formant émetteur d'infrarouges (7), configurés de façon à émettre un rayonnement infrarouge dans ladite chambre d'analyse (6) vers les gaz d'échappement contenus à l'intérieur de celle-ci ; et
• des moyens de détection multiple à infrarouges (8), configurés de façon à générer des quantités de mesures électriques en fonction de l'absorption dudit rayonnement par les gaz échappement présents à l'intérieur de la chambre d'analyse (6) ;

- des moyens de commande électroniques (15), qui sont configurés de façon à déterminer les concentrations d'un ou de plusieurs gaz d'échappement, en fonction d'une série de mesure de quantité électriques (Vmi) délivrées par lesdits moyens de détection multiple à infrarouges (8) et d'une quantité de référence électrique (V0) ;

ledit système (1) étant **caractérisé en ce qu'**il comprend :

- des moyens de comptage (9) reliés à ladite chambre d'analyse (6) pour effectuer une admission à l'intérieur de la chambre d'analyse (6) elle-même ;

et dans lequel lesdits moyens de commande électroniques (15) sont de plus configurés de façon à :

- commander lesdits moyens de pompage (9) de façon à prélever de l'air/des gaz résiduels contenus dans la chambre d'analyse (6) jusqu'à ce qu'une condition d'absence de gaz dans la chambre elle-même soit atteinte, la pression à l'intérieur de la chambre d'analyse (6) atteignant une pression minimale pré-établie ;
- commander lesdits moyens formant émetteur (7) de façon à émettre un rayonnement infrarouge dans ladite chambre d'analyse (6) ; et
- déterminer ladite quantité de référence électrique (V0) en fonction de la quantité électrique des signaux électriques générés par lesdits moyens de détection multiple à infrarouges (8) en fonction du rayonnement détecté dans ladite condition d'absence de gaz.

2. Système selon la revendication 1, comprenant au moins une vanne d'arrêt (14) conçue de façon à effectuer une commutation entre : un état d'ouverture, dans lequel elle établit la chambre d'analyse (6) en communication avec un conduit de gaz d'échappement (4) du moteur à combustion interne d'automobile (2) pour recevoir en entrée les gaz d'échappement ; et un état de fermeture, dans lequel elle isole la chambre d'analyse (6) du conduit de gaz d'échappement (4) ;

lesdits moyens de commande électroniques (15) étant de plus configurés de façon à :

- commuter la vanne d'arrêt (14) dans l'état de fermeture ;
- mettre en service lesdits moyens de pompage (9) de façon à prélever les gaz résiduels contenus dans la chambre d'analyse (6) jusqu'à ce que ladite condition d'absence de gaz soit atteinte ;
- commander lesdits moyens formant émetteur (7) de façon à émettre un rayonnement infrarouge dans ladite chambre d'analyse (6) ;
- commuter en service les moyens de détection multiple à infrarouges (8) de façon à générer une quantité de mesure électrique, en fonction de l'absorption dudit rayonnement dans la condition d'absence de gaz dans ladite chambre d'analyse (6) ; et
- attribuer à ladite quantité de référence électrique (V0) ladite quantité de mesure électrique détectée par les moyens de détection multiple à infrarouges (8) dans la condition d'absence de gaz dans la chambre d'analyse (6).

3. Système selon la revendication 2, dans lequel lesdits moyens de commande électroniques (15) sont configurés de façon à déterminer la concentration de chacun desdits gaz d'échappement selon une fonction d'absorption de rayonnement F(V0/Vmi), dans laquelle V0 est la quantité de référence générée par les moyens de détection multiple à infrarouges (8) dans la condition d'absence de gaz dans la chambre d'analyse (6), tandis que Vmi est la quantité de mesure électrique générée par les moyens de détection multiple à infrarouges (8) et associée à l'absorption d'un $i^{ème}$ gaz donné dans une bande de fréquence pré-établie correspondante.

4. Système selon l'une quelconque des revendications précédentes, dans lequel lesdits moyens de pompage (9) comprennent une pompe à vide ; ladite pression minimale pré-établie étant à peu près la pression de vide dans ladite chambre d'analyse (6).

5. Procédé pour déterminer la concentration d'un ou de plusieurs gaz échappement d'un moteur à combustion interne d'automobile (2) ;

ledit procédé comprenant les étapes consistant à :

- relier une chambre d'analyse de gaz (6), structurée de façon à contenir les gaz d'échappement devant être analysés, à un conduit d'échappement (4) du moteur à combustion interne (2) du véhicule (3) ;
- émettre, par l'intermédiaire de moyens formant émetteur (7), un rayonnement infrarouge dans ladite chambre d'analyse (6) vers les gaz d'échappement contenus à l'intérieur de celle-ci ;
- détecter, à l'aide de moyens de détection multiple à infrarouges (8), ledit rayonnement de façon à générer des quantités de mesures électriques (Vmi), en fonction de l'absorption dudit rayonnement par un ou plusieurs gaz d'échappement contenus à l'intérieur de ladite chambre d'analyse (6) ; et
- déterminer la concentration d'un ou de plusieurs gaz d'échappement, en fonction d'une série desdites quantités de mesures électriques (Vmi) délivrées par lesdits moyens de détection multiple à infrarouges (8) et d'une quantité de référence électrique (V0) ;

ledit procédé étant **caractérisé en ce qu'**il comprend les étapes consistant à :

- aspirer les gaz résiduels contenus dans la chambre d'analyse (6) jusqu'à ce qu'une condition d'absence de gaz soit atteinte dans la chambre elle-même, la pression à l'intérieur de la chambre d'analyse (6) atteignant une pression de référence minimale ; et
- déterminer ladite quantité de référence électrique (V0) en fonction de la quantité électrique du signal électrique généré par lesdits moyens de détection multiple à infrarouges (8) dans ladite condition d'absence de gaz.

6. Procédé selon la revendication 5, comprenant les étapes consistant à disposer :

- au moins une vanne de coupure (14) pouvant fonctionner de façon à effectuer une commutation entre :

un état d'ouverture, dans lequel elle établit la chambre d'analyse (6) en communication avec le conduit d'échappement (4) du moteur à combustion interne d'automobile (2) pour recevoir en entrée les gaz d'échappement ; et un état de fermeture, dans laquelle elle isole la chambre d'analyse (6) du conduit d'échappement (4) ; et

- des moyens de pompage (9) reliés à ladite chambre d'analyse (6) ;

ledit procédé comprenant de plus les étapes consistant à :

- commuter la vanne d'arrêt (14) dans l'état de fermeture ;
- commuter en service lesdits moyens de pompage (9) de façon à aspirer l'air/les gaz résiduels contenus dans la chambre d'analyse (6) jusqu'à ce que ladite condition d'absence de gaz dans la chambre d'analyse (6) elle-même soit atteinte ;
- commander lesdits moyens formant émetteur (7) pour émettre un rayonnement infrarouge dans ladite chambre d'analyse (6) ;
- commander lesdits moyens de détection multiple à infrarouges (8) pour générer une quantité de mesure électrique, en fonction de l'absorption dudit rayonnement dans la condition d'absence de gaz dans ladite chambre d'analyse (6) ; et
- attribuer à ladite quantité de référence électrique (V0) ladite quantité de mesure électrique détectée par les moyens de détection multiple à infrarouges (8) dans la condition d'absence de gaz dans la chambre d'analyse (6).

7. Procédé selon la revendication 6, comprenant les étapes de détermination de la concentration d'un ou de plusieurs gaz d'échappement selon une fonction d'absorption de rayonnement F(V0/Vmi), dans laquelle : V0 est la quantité de référence du signal électrique généré par les moyens de détection multiple à infrarouges (8) dans ladite condition d'absence de gaz ; tandis que Vmi est la quantité de mesure électrique du signal électrique généré par les moyens de détection multiple à infrarouges (8) associé au $i^{ème}$ gaz.

8. Procédé selon l'une quelconque des revendications 5 à 7, dans lequel ladite pression minimale pré-établie correspond approximativement à une pression de vide dans ladite chambre d'analyse (6).

Fig. 1

Fig. 2

**EP 2 715 308 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6516656 B1